# EUROPEAN PATENT SPECIFICATION

(11) **EP 2 412 556 B1**
(45) Date of publication and mention of the grant of the patent: **29.05.2013**
(21) Application number: 10425257.2
(22) Date of filing: 29.07.2010
(51) Int. Cl.: B60K 11/08

(54) **Device for opening and closing cooling air intakes on the front part of a vehicle**
Vorrichtung zum Öffnen und Schließen von Kühllufteinlassöffnungen auf der Vorderseite eines Fahrzeugs
Dispositif pour ouvrir et fermer des orifices d'entrée d'air de refroidissement sur la partie avant d'un véhicule

(43) Date of publication of application: 01.02.2012
(73) Proprietor: Iveco S.p.A., 10156 Torino (IT)
(72) Inventor: Tregnago, Roberto, 10133 Torino (IT); Sandri, Silvano, 12037 Saluzzo (IT); Fioretti, Giandomenico, 10153 Torino (IT); Nicosia, Biagio, 10141 Torino (IT)
(74) Representative: Borsano, Corrado

(56) References cited:
- CH-A- 543 669
- DE-A1-102006 053 883
- DE-A1-102006 054 970

## Description

### Application field of the invention

The present invention refers to a device for opening and closing cooling air intakes on the front part of a vehicle.

### Description of the prior art

One of the main known problems arising in vehicles' design, especially industrial or commercial vehicles, is the reduction of fuel consumption by improving vehicle's aerodynamics.

For example, in an industrial vehicle travelling at a speed of 90 km/h, 50% of the generated energy is spent for aerodynamics and for driving auxiliary systems, such as for example the air conditioner.

Therefore the vehicle's aerodynamics remarkably affects the fuel consumption.

It is known that vehicle's aerodynamics is influenced by the airflow coming from the front part of the vehicle, which is used to cool the radiator cores, the engine and the auxiliary systems, usually placed under the cabin.

As a matter of fact, the air passing through the radiator cores is necessary to remove the heat generated (for example by the intercooler, or by the radiator, or by the condenser of the air conditioner); when the air passes through the vehicle, it passes through the fan, and other hot parts, for example the exhaust pipe, the silencers, the catalysers, and then it joins the external air flow on the back of the vehicle, generating a negative impact in terms of aerodynamics.

When the vehicle is normally used, it is not necessary to make the engine deliver the highest possible power, for example when the vehicle is used on a highway, at constant speed, not in full load conditions. Therefore it is not necessary that the whole airflow coming from the front air intakes passes through the radiator cores, because this generates an excessive air flow rate with respect to the limit condition in which the highest possible power is delivered.

Thus a management of the airflow through the radiator cores is actuated, from the one hand in order to make the correct quantity of air flow on the radiator cores, from the other hand in order to improve the aerodynamic behaviour, which is optimal when the front surface of the vehicle is closed as the vehicle's speed increases. Examples of known device for opening and closing air intakes according to the preamble of claim 1, are disclosed in DE 10 2006 054970, CH 543669 and DE 10 2006 053883.

The use of shutters that can open and close in correspondence of the air intakes on the front part of the vehicle is known in the art, in order to control the quantity of air passing through the air intakes towards the radiator cores.

Shutters are horizontally pivoted with respect to their longitudinal axis and their upper end. As the vehicle's speed increases, shutters are gradually closed.

The solutions known in the art, however, have potential problems essentially due to the longitudinal dimensions of the vehicle, especially in open position, in addition to the complexity of the control, the leverages and the kinematic mechanisms for moving a single shutter, as well as their tendency to be deformed by the impact of the air.

### Summary of the invention

Therefore the aim of the present invention is to provide a device for opening and closing a cooling air intake on the front part of a vehicle, suitable to overcome the drawbacks mentioned above.

The subject of the present invention is a device for opening and closing one or more cooling air intakes on the front part of a vehicle according to claim 1.

A particular subject of the present invention is a device for opening and closing of cooling air intake on the front part of a vehicle, as described more fully in the claims, which are an integral part of this description.

### Brief description of the Figures

Further purposes and advantages of the present invention will become clear from the following detailed description of a preferred embodiment (and its alternative embodiments) and the drawings that are attached hereto, which are merely illustrative and non-limitative, in which:
figure 1 shows a schematic view of the front part of an industrial vehicle;
figure 2 shows a front part of the vehicle comprising air intakes;
figure 3 shows an inner view of the front part of the vehicle;
figure 4 shows some views of an embodiment of the device for opening and closing the air intakes according to the invention, showing how it is applied on the front part of the vehicle;
figure 5 shows an alternative embodiment of the device, in a front and in a section view.

This alternative is not part of the invention claimed.

In the drawings the same reference numbers and letters identify the same elements or components.

### Detailed description of preferred embodiments of the invention

The idea at the basis of the invention is to realize a device for opening and closing the air intakes in the front part of the vehicle (radiator grill, hood or bumper) with one or more shutters which, instead of being pivoted on axles, can move up and down with a vertical movement as a function of the quantity of air that has to be introduced from the outside.

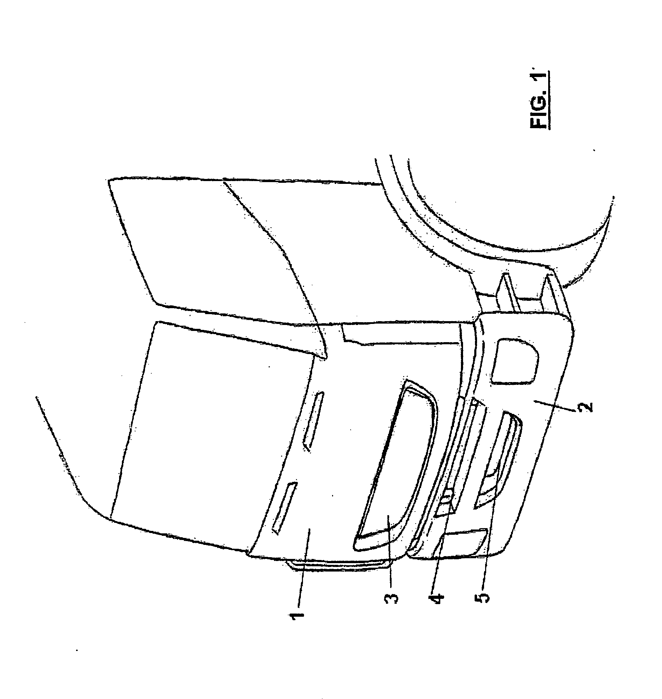

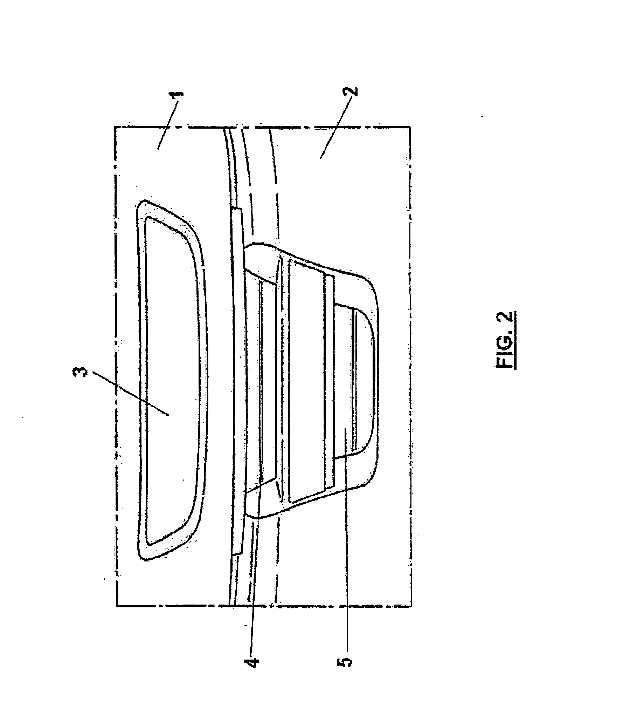

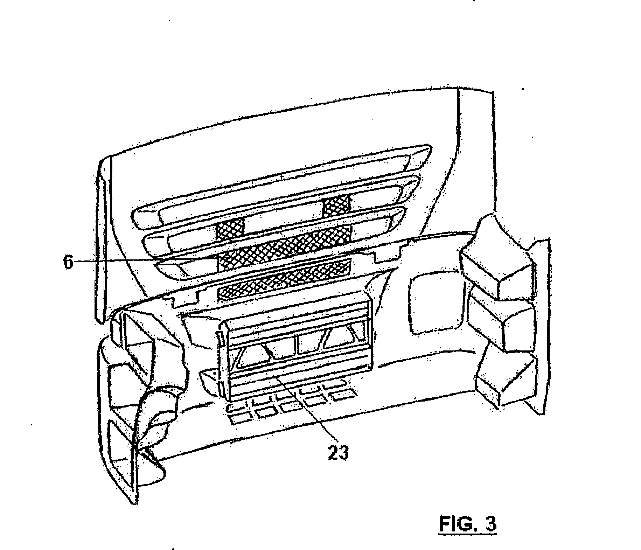

Figures 1 and 2 show the front part of a cabin of an industrial vehicle, which has air intake openings 3, 4, 5 in the areas of the radiator grill 1 and of the bumper 2. The openings are usually provided with protection grills 6 in the internal part of the vehicle's front (shown in fig. 3).

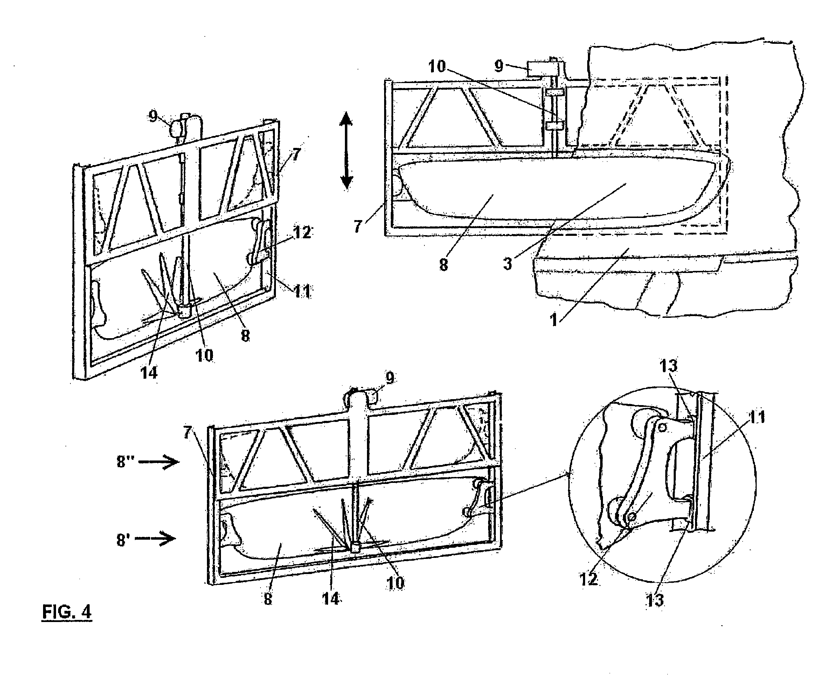

With reference to figure 4, according to the present invention, a frame 7 with a closed structure is arranged, within which a shutter 8 can longitudinally slide (in the direction indicated by the arrow) from a lower position to an upper position.

The sliding is driven by a linear actuator 9, for example an electric motor (or ratiomotor) whose one end is fixed to the frame, in central position, with a retractable control rod 10.

The frame 7 is applied in correspondence of an opening, for example the upper opening 3, in the internal part of the vehicle's front 1, so that the shutter 8 can completely close the opening itself (fig. 4 up to the right), when it is placed at the one end of the frame 7, for example the lower end 8', while when it is placed at the other end 8" of the frame, it completely opens said opening, allowing the passage of the air through the vehicle.

The shutter 8 slides on lateral guides or rails 11 made on the sides of the frame. For this purpose the shutter has lateral extensions 12 which can be inserted in the guides 11, and sliding blocks 13 for example made of teflon.

The shape of the shutter fits the shape of the opening, in order to completely close it, therefore it can be slightly convex and/or inclined. The vehicle's aerodynamics is thus improved.

The sliding guides 11 are in a position that protects them from the damages caused by the weather, since the frame is bigger than the corresponding opening on the vehicle's front.

The shutter may have stiffening ribs 14 in order to reduce the deformation due to the airflow.

A safety mechanism (not shown) may also be present on the frame, which blocks the sliding of the shutter and retracts it when external bodies are introduced in the sliding slot, in order to avoid damages to persons. The safety mechanism may be an infrared barrier, or a flat band/bar on the lower side of the frame having a relay: when the flat band retracts because of the presence of an object, the relay trips; or a maximum load may be set on the actuator itself, so that it stops and it retracts when the load exceeds said maximum load.

The shutter may be made of plastic, and/or of fibrous cloth with structural characteristics having variable thickness, with acoustic insulation properties towards the outside. It may also be double-layered in order to be more stiff.

The device according to the present invention is modular, namely more shutters may be present with their respective frame, for one or more front openings on the vehicle. The distance between the openings may be used as a sliding space for the open position, thus being hidden by the shutters. The dimensions of the frame and of the shutter are adaptable to the dimensions of the opening of the vehicle's front. The height of the frame is at least two times the height of the shutter.

Moreover said device may be mounted on the vehicle as an optional also after the purchasing of the vehicle.

This solution occupies less longitudinal space on the vehicle, than the solutions known in the art.

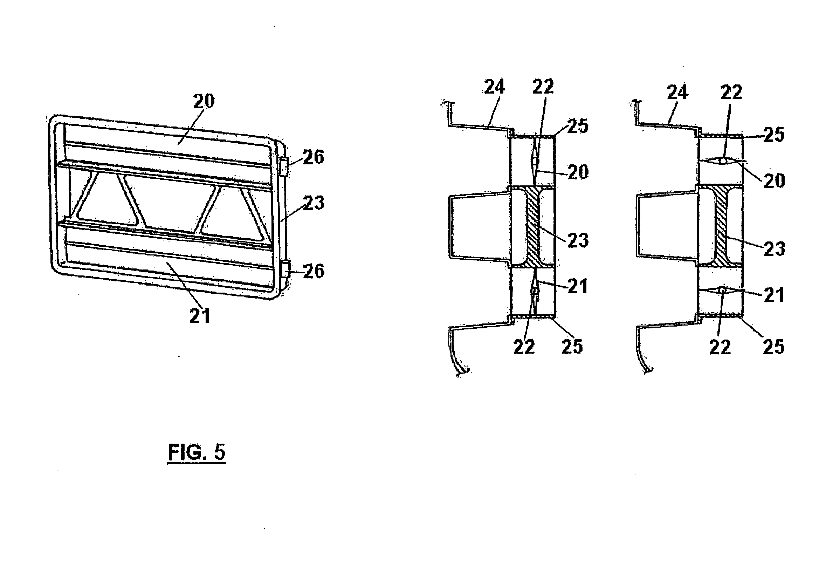

Figures 3 and 5 also show a solution of a device for opening and closing air intakes comprising swinging shutters 20, 21, housed in a frame 23 connected to the vehicle's front, for example behind the air intake openings of the bumper 24.

The hinging axis 22 of the shutters is central: thus the shutter is strengthened, the structural balancing is improved, and the longitudinal space occupied in open position is reduced, thus reducing the structural deformations due to the impact of the air.

Furthermore, the shutters are placed in ducts 25 of the frame which have also the function to convey the airflow. The opening and closing of the shutters is driven by actuators 26 placed on the side of the frame, whose position may be completely closed and completely open as well as intermediate.

The air intakes on the vehicle's front may have different shapes: their respective openings may be horizontally develop and be vertically adjacent, as in the attached figures, or, on the contrary, may be vertically developed and be horizontally adjacent. In any case the frame may fit the shape of the openings, and possibly it may be one and only comprising more shutters, one for each opening, whose opening and closing may be independently driven. The distance between successive openings will be at least equal to the height of the shutters, so that they can take completely hidden positions.

From the description set forth above it will be possible for the person skilled in the art to embody the invention with no need of describing further construction details.

## Claims

1. Device for opening and closing one cooling air intake on the front part of a vehicle, said device comprising at least a frame (7) with closed structure, suitable to be applied inside said front part of the vehicle, in correspondence of said air intake; the device comprising:
- a shutter (8) suitable to slide inside the frame between two positions, a first of said positions being in correspondence of said air intake, so that in said first position the shutter closes said air intake, a second position leaving said air intake open;
- means for actuating said sliding; **characterized in that** it comprises at least a safety mechanism on the frame, suitable to block the sliding of the shutter and to retract it in case foreign bodies are introduced in the frame, and **in that** in said first position the shutter completely closes said air intake and in said second position completely leaves said air intake open.

2. Device as in claim 1, wherein said means for actuating the sliding comprise:
- lateral guides (11) in the frame (7);
- lateral extensions (12) in said at least a shutter (8), suitable to be inserted and to slide in said guides (11);
- at least a linear actuator (9) applied on the frame, in order to control the sliding of said at least a shutter (8).

3. Device as in claim 2, wherein said lateral extensions comprise sliding blocks (13).

4. Device as in claim 2, wherein said at least a linear actuator (9) is placed on one side of the frame, centrally with respect to the shutter.

5. Device as in claim 1, wherein said shutter comprises stiffening ribs (14).

6. Device as in claim 1, wherein said shutter (8) may be made of plastic, and/or of fibrous cloth with structural characteristics having variable thickness, with acoustic insulation properties towards the outside of the vehicle, or being double-layered in order to be more stiff.

7. Vehicle comprising a device as in any of the previous claims.

## Patentansprüche

1. Vorrichtung zum Öffnen und Schließen eines Kühllufteintrittes an dem Vorderteil eines Fahrzeugs, wobei die Vorrichtung zumindest einen Rahmen (7) mit einem geschlossenen Aufbau umfasst, der zur Anwendung innerhalb des Vorderteils des Fahrzeugs entsprechend dem Lufteintritt geeignet ist;
wobei die Vorrichtung umfasst:
- einen Verschluss (8), der zum Gleiten innerhalb des Rahmens zwischen zwei Positionen geeignet ist, wobei eine erste der Positionen mit dem Lufteintritt in Übereinstimmung ist, so dass in der ersten Position der Verschluss den Lufteintritt verschließt, wobei eine zweite Position den Lufteintritt offen lässt;
- ein Mittel zum Betätigen des Gleitens;
**dadurch gekennzeichnet, dass** sie zumindest einen Sicherheitsmechanismus an dem Rahmen umfasst, der dazu geeignet ist, das Gleiten des Verschlusses zu blockieren und diesen in dem Fall zurückzuziehen, dass Fremdkörper in den Rahmen eingeführt sind, und dass in der ersten Position der Verschluss den Lufteintritt vollständig schließt und in der zweiten Position den Lufteintritt vollständig offen lässt.

2. Vorrichtung nach Anspruch 1,
wobei das Mittel zum Betätigen des Gleitens umfasst:
- Seitenführungen (11) in dem Rahmen (7);
- Seitenverlängerungen (12) in dem zumindest einen Verschluss (8), die zum Einsetzen und Gleiten in den Führungen (11) geeignet sind;
- zumindest einen Linearaktuator (9), der auf den Rahmen angewendet ist, um das Gleiten des zumindest einen Verschlusses (8) zu steuern.

3. Vorrichtung nach Anspruch 2,
wobei die Seitenverlängerungen Gleitblöcke (13) umfassen.

4. Vorrichtung nach Anspruch 2,
wobei der zumindest eine Linearaktuator (9) auf einer Seite des Rahmens zentral in Bezug auf den Verschluss angeordnet ist.

5. Vorrichtung nach Anspruch 1,
wobei der Verschluss Aussteifungsrippen (14) umfasst.

6. Vorrichtung nach Anspruch 1,
wobei der Verschluss (8) aus Kunststoff und/oder Fasergewebe mit strukturellen Charakteristiken, die variable Dicken besitzen, mit akustischen Isolationseigenschaften in Richtung der Außenseite des Fahrzeugs hergestellt oder doppelschichtig sein kann, um steifer zu sein.

7. Fahrzeug mit einer Vorrichtung nach einem der vorhergehenden Ansprüche.

## Revendications

1. Dispositif pour ouvrir et fermer un orifice d'entrée d'air de refroidissement sur la partie avant d'un véhicule, ledit dispositif comprenant au moins un cadre (7) avec une structure fermée, adapté pour être appliqué à l'intérieur de ladite partie avant du véhicule de manière à correspondre avec ledit orifice d'entrée d'air ;
le dispositif comprenant :
- un obturateur (8) adapté pour glisser dans le cadre entre deux positions, une première correspondant audit orifice d'entrée d'air de sorte que dans ladite première position, l'obturateur ferme ledit orifice d'entrée d'air, une seconde position laissant ouvert ledit orifice d'entrée d'air ;
- des moyens pour actionner ledit glissement ;
**caractérisé en ce qu'**il comprend au moins un mécanisme de sécurité sur le cadre adapté pour bloquer le glissement de l'obturateur et le rétracter au cas où des corps étrangers seraient introduits dans le cadre et **en ce que** dans ladite première position, l'obturateur ferme complètement ledit orifice d'entrée d'air et dans ladite seconde position, il laisse ledit orifice d'entrée d'air complètement ouvert.

2. Dispositif selon la revendication 1, dans lequel lesdits moyens pour actionner le glissement comprennent :
- des guidages latéraux (11) dans le cadre (7) ;
- des extensions latérales (12) dans ledit au moins un obturateur (8) adaptées pour être insérées et glisser dans lesdits guidages (11) ;
- au moins un actionneur linéaire (9) appliqué sur le cadre afin de commander le glissement dudit au moins un obturateur (8).

3. Dispositif selon la revendication 2, dans lequel lesdites extensions latérales comprennent des blocs glissants (13).

4. Dispositif selon la revendication 2, dans lequel ledit au moins un actionneur linéaire (9) est placé centralement par rapport à l'obturateur sur un côté du cadre.

5. Dispositif selon la revendication 1, dans lequel ledit obturateur comprend des nervures de renforcement (14).

6. Dispositif selon la revendication 1, dans lequel ledit obturateur (8) peut être en plastique et/ou en tissu fibreux avec des caractéristiques structurelles ayant une épaisseur variable avec des propriétés d'isolation acoustique vers le côté extérieur du véhicule ou présentant une double couche pour augmenter sa rigidité.

7. Véhicule comprenant un dispositif selon l'une quelconque des revendications précédentes.
